Europäisches Patentamt

European Patent Office

Office européen des brevets

(11) Numéro de publication : **0 246 584 B1**

(12) **FASCICULE DE BREVET EUROPEEN**

(45) Date de publication du fascicule du brevet :
06.03.91 Bulletin 91/10

(51) Int. Cl.$^5$ : **F16K 41/12**

(21) Numéro de dépôt : **87107126.2**

(22) Date de dépôt : **16.05.87**

(54) **Robinet à membrane.**

(30) Priorité : 23.05.86 LU 86438

(43) Date de publication de la demande :
25.11.87 Bulletin 87/48

(45) Mention de la délivrance du brevet :
06.03.91 Bulletin 91/10

(84) Etats contractants désignés :
AT BE CH DE FR GB LI NL SE

(56) Documents cités :
FR-A- 2 514 454
US-A- 2 488 968
US-A- 3 128 632

(73) Titulaire : **CEODEUX S.A.**
**24 rue de Diekirch**
**L-7440 Lintgen (LU)**

(72) Inventeur : **Schmitz, Jean-Claude**
**57 rue des Genêts**
**L-8131 Bridel (LU)**
Inventeur : **Kerger, Léon**
**31 rue Robert Schuman**
**L-7382 Helmdange (LU)**
Inventeur : **Kremer, Paul**
**72 rue du Nord**
**L-7242 Walferdange (LU)**

(74) Mandataire : **Meyers, Ernest et al**
**Office de Brevets FREYLINGER & ASSOCIES**
**B.P. 1 321, route d'Arlon**
**L-8001 Strassen (LU)**

## Description

La présente invention concerne un robinet à membrane pour gaz comprimés ou liquifiés comprenant un corps renfermant un organe de fermeture avec une surface d'étanchéité à l'intersection d'une conduite d'admission et d'une conduite de sortie du gaz et un piston soumis à l'action de moyens élastiques, des moyens de commande reliés audit organe de fermeture par l'intermédiaire d'un poussoir et d'une membrane d'étanchéité disposée entre celui-ci et le piston, pour réduire le passage entre la conduite d'admission et la conduite de sortie contre l'action desdits moyens élastiques.

Il existe différents types de robinets pour gaz sous pression qui se différencient essentiellement par leurs systèmes d'étanchéité par rapport à l'atmosphère et qui ont chacun leurs avantages et inconvénients. C'est ainsi que les robinets dans lesquels l'étanchéité est assurée par un joint torique ou un bourrage ont l'avantage d'une plus longue durée et celui de se détériorer progressivement, c'est-à-dire que les fuites de gaz deviennent progressivement plus grandes.

Les robinets à membrane du genre décrit ci-dessus et connus par exemple par le document US-A-3979105 ont l'avantage de pouvoir contenir des pressions élevées et de ne pas être attaqués par les gaz. Par contre, les membranes ont une durée relativement modeste et, en cas d'usure, leur rupture est pratiquement instantanée, ce qui signifie une importante fuite de gaz en cas de rupture. Ces robinets n'offrent, par conséquent, pas assez de sécurité dans des applications avec des gaz dangereux ou toxiques.

Le document FR-A-2514454 décrit un robinet avec un diaphragme ondulé qui est associé à une rondelle ayant pour but de guider le diaphragme afin de lui conserver sa forme ondulée.

Le but de la présente invention est de proposer un nouveau robinet qui réunit les avantages des deux types décrits ci-dessus.

Ce but est atteint grâce à un robinet ayant les caractéristiques de la revendication principale.

D'autres particularités et caractéristiques ressortiront de la description détaillée d'un mode de réalisation préféré, présenté ci-dessous, à titre d'illustration, en référence aux dessins annexes , dans lesquels :

la figure 1 montre une vue générale d'un robinet en coupe verticale ;
la figure 2 est une vue fragmentaire agrandie du robinet de la figure 1 au niveau de la membrane, en position fermée et
la figure 3 est une vue correspondant à celle de la figure 2, mais représentant la position fermée.

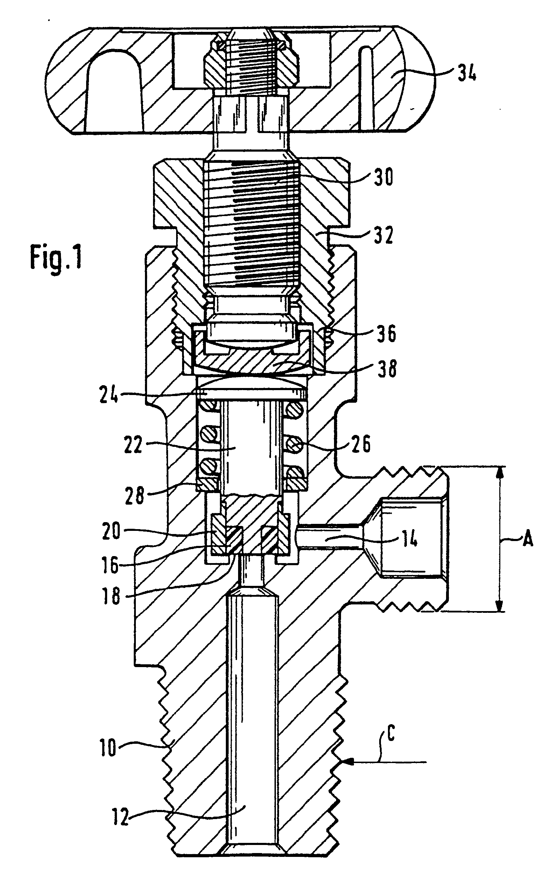

Le robinet représenté sur la figure 1 comporte un corps 10, par exemple en acier inoxydable, dont la partie inférieure est pourvue d'un filetage lui permettant d'être vissé directement sur un récipient à gaz. Dans l'exemple représenté, le corps 10 du robinet comporte un canal d'admission axial 12 et un canal de sortie radial 14. A l'intersection de ces deux canaux 12 et 14 se trouve un organe d'étanchéité comprenant une pastille 16, par exemple en matière synthétique tel que du PCTFE qui coopère avec un siège 18 pour régler, par exemple libérer ou fermer le passage entre les canaux 12 et 14. La pastille 16 est coincée dans une douille 20 qui constitue la prolongation d'une tige 22, dont l'extrémité opposée à la pastille 16 est solidaire d'un piston 24 à tête bombée. Autour de la tige 22 est disposé un ressort hélicoïdal 26 s'appuyant d'une part sur le piston 24 et d'autre part sur une bague 28 retenue par un épaulement de l'alésage axial du corps 10. Ce ressort 26 a, par conséquent, tendance à lever la pastille 16 de son siège 18 pour ouvrir le passage.

Une tige supérieure 30 avec un pas de vis extérieur traverse une étoupe 32 vissée à son tour dans la partie supérieure du corps 10. La tige 30 peut donc être déplacée axialement par rotation, par exemple au moyen du volant de manoeuvre 34.

La partie inférieure de l'étoupe 32 est creuse et forme une douille de guidage 36 d'un poussoir 38 dont la surface inférieure est bombée et dont la surface supérieure est en contact avec l'extrémité inférieure de la tige supérieure 30.

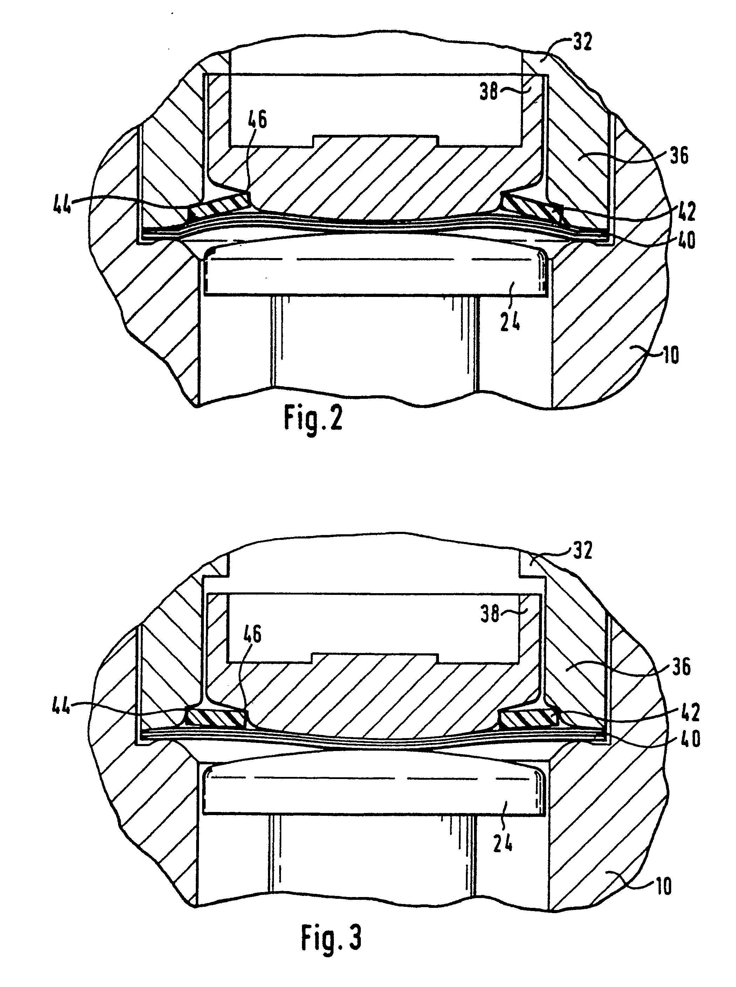

Comme représenté sur les figures 2 et 3, l'étanchéité vers l'extérieur est assurée par une membrane 40 coincée entre le bord inférieur de la douille de guidage 36 et un épaulement circulaire du corps 10. La membrane 40 est, de préférence, constituée d'un paquet de disques minces, par exemple en acier inoxydable. La région médiane de cette membrane 40 est coincée entre les têtes bombées du piston 24 et du poussoir 38.

L'ouverture du robinet sous l'action de la rotation du volant 34 pour faire monter la tige 30 permet la levée du piston 24 sous l'action du ressort 26 et le dégagement de la pastille 16 de son siège 18. La rotation dans le sens inverse du volant 34 fait descendre le poussoir 38 et le piston 24 contre l'action du ressort 26.

Les positions d'ouverture et de fermeture sont illustrées respectivement par les figures 2 et 3. On constate que la flexibilité de la membrane 40 lui permet de suivre ce mouvement axial.

Dans les robinets classiques, cette déformation de la membrane 40 implique une flexion qui se produit toujours au même endroit, c'est-à-dire dans la région circulaire périphérique dont le rayon correspond à ceux du poussoir 38 et du piston 24. Malheureusement, les sollicitations répétées se produisant toujours au même endroit entraînent une détérioration rapide de la membrane à cet endroit et, en cas de rupture, les fuites de gaz sont immédiates.

Pour remédier à cet inconvénient, la présente invention propose, selon un mode de réalisation préféré, une rondelle 42 qui est placée sur la membrane 40 et dont le bord extérieur est coincé dans un décrochement circulaire intérieur 44 de la douille 36, alors que son bord intérieur est engagé autour d'un décrochement circulaire 46 réalisé dans la tête bombée du poussoir 38. Cette rondelle 42 est constituée d'une matière légèrement déformable, par exemple une matière synthétique tel que du nylon, de manière à pouvoir assurer une certaine étanchéité même en cas de rupture de la membrane 40.

Outre la particularité de coopérer au maintien de l'étanchéité, la rondelle 42 a comme fonction essentielle de modifier la déformation de la membrane sous l'action du poussoir 38. En effet, grâce à la présence de la rondelle 42, la membrane ne subit plus une flexion périphérique très localisée, mais se transforme, dans son ensemble, entre les configurations des figures 2 et 3. Les sollicitations mécaniques de la membrane 40 sont donc réparties sur sa surface, au lieu d'être localisées sur un cercle périphérique, ce qui a permis d'accroître considérablement sa durée et son nombre de manoeuvres avant la détection d'une fuite.

Il reste à signaler que la présente invention n'est pas seulement applicable à des robinets de fermeture mais également à des robinets de réglage, des détendeurs et autres, que ce soit pour des gaz sous pression ou des gaz liquéfiés.

## Revendications

1. Robinet à membrane pour gaz comprimés ou liquifiés comprenant un corps (10) renfermant un organe de fermeture avec une surface d'étanchéité à l'intersection d'une conduite d'admission (12) et d'une conduite de sortie (14) du gaz et un piston (24) soumis à l'action de moyens élastiques (26), des moyens de commande reliés audit organe de fermeture par l'intermédiaire d'un poussoir (38) et d'une membrane d'étanchéité (40) disposée entre celui-ci et le piston (24), pour réduire le passage entre la conduite d'admission (12) et la conduite de sortie (14) contre l'action desdits moyens élastiques (26) ou agrandir ledit passage sous l'action desdits moyens élastiques (26), caractérisé en ce que la membrane (40) est associée à une rondelle (42) constituée d'une matière légèrement déformable en matière synthétique et coincée, entre la membrane (40), une douille (36) de guidage du poussoir (38) et la tête du poussoir (38).

2. Robinet selon la revendication 1, caractérisé en ce que la douille de guidage (36) et la tête du poussoir sont pourvus de décrochements circulaires (44) et (46) pour le maintien de la rondelle.

## Ansprüche

1. Membranventil für Druckgase oder für Flüssiggase mit einem Gehaüse (10), welches ein Schliessorgan mit einer Abdichtungsoberfläche an dem Schnittpunkt zwischen einer Zufuhrleitung (12) und einer Austrittsöffnung (14) des Gases begreift, sowie einen der Einwirkung von elastischen Mitteln (26) ausgesetzten Kolben (24), über einen Stössel (38) mit dem Schliessorgan verbundene Betätigungsmittel, sowie eine zwischen dem Stössel (38) und dem Kolben (24) angeordnete Abdichtungsmembran (40) um den Durchgang zwischen der Zufuhrleitung (12) und der Austrittsöffnung (14) gegen die Einwirkung der elastischen Mittel (26) zu reduzieren oder den besagten Durchgang durch die Einwirkung der genannten elastischen Mittel (26) zu vergrössern, dadurch gekennzeichnet, dass die Membran (40) mit einer aus einem leicht verformbaren synthetischen Material gebildeten Dichtung (42) zusammenwirkt, welch letztere zwischen der Membran (40) und einer Leithülse (36) des Stössels (38), sowie dem Kopf des Stössels (38) eingeklemmt ist.

2. Membranventil nach Anspruch 1, dadurch gekennzeichnet, dass die Leithülse (36) und der Kopf des Stössels (38) mit kreisförmigen Absätzen (44) und (46) versehen sind um den Dichtungsring (42) in seiner Stellung zu halten.

## Claims

1. Diaphragm valve for compressed or liquefied gases, comprising a body (10) containing a closing member with a sealing surface at the intersection of an inlet duct (12) and an outlet duct (14) for the gas, and a piston (24) subjected to the action of elastic means (26), control means being connected to the said closing member via a pusher (38) and via a sealing diaphragm (40) arranged between the latter and the piston (24), in order to reduce the passage between the inlet duct (12) and the outlet duct (14) counter to the action of the said elastic means (26) or enlarge the said passage under the action of the said elastic means (26), characterized in that the diaphragm (40) is associated with a washer (42) consisting of a slightly deformable synthetic material, which is wedged between the diaphragm (40), a guide bush (36) of the pusher (38) and the head of the pusher (38).

2. Valve according to claim 1, characterized in that the guide bush (36) and the head of the pusher (38) are provided with circular recesses (44) (46) to maintain the washer.

Fig.1

Fig.2

Fig. 3